# EUROPEAN PATENT SPECIFICATION

(11) **EP 1 790 594 B1**
(45) Date of publication and mention of the grant of the patent: **26.05.2010**
(21) Application number: 06024108.0
(22) Date of filing: 21.11.2006
(51) Int. Cl.: B65G 47/96

(54) **Conveyor**
Fördervorrichtung
Convoyeur

(30) Priority: 25.11.2005 NL 1030529
(43) Date of publication of application: 30.05.2007
(73) Proprietor: Vanderlande Industries B.V., 5466 RB Veghel (NL)
(72) Inventor: Van Vught, Gregorius Maria Adrianus, 5627 CM Eindhoven (NL); Goelema, Cornelis Christiaan, 5614 BN Eindhoven (NL)
(74) Representative: Dorna, Peter

(56) References cited:
- WO-A-98/47797
- GB-A- 191 324 113
- US-B1- 6 899 217

## Description

The present invention relates to a conveyor comprising a train of interconnected conveying units which are movable along a guide that defines a conveying path having a central axis, each conveying unit comprising a chassis and a load-bearing element for supporting products to be conveyed, said chassis comprising a frame, at least one guide element connected to the frame for guiding cooperation with said guide, at least one supporting element connected to the frame, via which the associated conveying unit is supported on a supporting surface, said conveyor further comprising a connecting element between two successive chassis, which connecting element is pivotally connected, via a first pivot, to the frame of a first chassis of said two successive chassis, and which is on the other hand pivotally connected, via a second pivot, to the frame of a second chassis of said two successive chassis.

In particular conveyors comprising an endless train of interconnected movable conveying units, but also conveyors comprising a relatively long train of such conveying units, exhibit the problem that individual conveying units within the train accelerate and decelerate when the train rounds a bend in the conveying path, whilst the train as a whole moves at a constant speed, as a result of which the connections between successive conveying units are subjected to an additional load. Said load may at some point result in failure of the connections in question and/or make it necessary to replace the connections in question (prematurely) or to make them extra strong.

US patent US 3,231,066 describes a conveyor as referred to in the introduction, which is configured as a sorting conveyor comprising a train of carriage means provided with a laterally tiltable deck. Successive carriage means are interconnected via plates. Slotted holes are formed in said plates, through which upright pins of the respective carriage means extend, enabling relative movement between the plate and the carriage means interconnected by the plate in question. The conveyor described in US 3,231,066, which employs a connecting element configured as a plate between adjacent carriage means, does not provide an improvement or a solution as regards the above-described problem, but adds an additional drawback in that the constructional features for interconnecting successive carriage means are relatively complex and, moreover, will in any case make objectionable noise in use on account of the relative movement between the plate and an the carriage means via the slotted holes in the plate.

International patent application WO 98/47797 presents the closest prior art according to the preamble of claim 1 and discloses a chain of conveyor trucks interconnected by connecting parts which are pivotally connected to the trucks around vertical axes. When the chain of conveyor trucks moves along a curved path, these axes as well as the related connecting parts are within the length of the curved paths on the outside of the curved conveying path.

The object of the present invention is to provide a conveyor as referred to in the introduction, which on the one hand may be of simple construction and which on the other hand provides a solution or at least a significant improvement as regards the problems related to the acceleration and deceleration of individual conveying units within a conveyor train upon rounding a bend. To that end, the first pivot and the second pivot associated with a connecting element are positioned between the at least one guide element associated with the first chassis and the at least one guide element associated with the second chassis, seen in the longitudinal direction of the train, in such a manner that the first pivot and the second pivot are positioned on the outer side of the central axis of the conveying path and that a central part of the connecting element located between ends of the connecting element is positioned on the inner side of the central axis of the conveying path when rounding a bend in the conveying path. The provision of the first pivot and the second pivot between the respective guide elements of successive chassis achieves that the difference between the centre-to-centre distance between two successive chassis in a rectilinear part of the conveying path, measured along the central axis of the conveying path, and the centre-to-centre distance between two successive chassis in a bend of the conveying path, measured along the central axis of the conveying path, is at least considerably smaller than in the corresponding situation in the prior art. Consequently, the accelerations and decelerations that the conveying units undergo in a bend will be considerably smaller as well, as a result of which the mechanical load on the connections between the conveying units will in turn be lower as well.

The above advantages will be obtained in particular if the centre-to-centre distance between two successive chassis in a rectilinear part of the conveying path, measured along the central axis of the conveying path, equals the centre-to-centre distance between two successive chassis in a bend of the conveying path, measured along the central axis of the conveying path, or at least deviates maximally 0.07% therefrom.

In another preferred embodiment, the load-bearing element is fully supported by the frame. The present preferred embodiment has the advantage that the connecting element may be of comparatively light construction, because the connecting element only needs to interconnect successive chassis, without having to perform a supporting function in relation to the load-bearing element and a product that may be conveyed thereon.

A very stable guidance is obtained if the guide comprises two guide members that extend on opposite sides of the central axis of the conveying path, and if each chassis comprises at least two guide elements that guidingly co-operate with the two respective guide members.

Another preferred embodiment is characterised in that said at least one guide element and said at least one supporting element lie directly beside each other, seen in the conveying direction. An important advantage that is achieved in this manner is that the supporting element need not be pivotally connected to the chassis in question, so that it is possible to use fixedly mounted wheels rather than castors, which has a significant cost-reducing effect. In addition to that, the present preferred embodiment achieves that the conveyor can be operated in two opposite conveying directions without this necessarily leading to a different conveying behaviour.

It is generally preferable within the above framework if said at least one supporting element is rigidly connected to the frame, which does not rule out the possibility that if the supporting element is configured as a wheel or the like, the supporting element will rotate about an axis of rotation which is rigidly positioned with respect to the supporting element.

For constructional reasons it is furthermore preferable if said at least one supporting element is positioned further away from the central axis of the conveying path than said at least one guide element. Thus, a guide as well as a supporting surface can be provided by means of a simple, horizontal U-shaped section, with the inner side of the lower, horizontal leg of the U-shaped section functioning as a supporting surface and an end face of one of the two horizontal legs, preferably the upper leg, functioning as a guide for said at least one guide element.

For constructional reasons it is preferable if the connecting element is an at least substantially rod-shaped element, which may be of simple and inexpensive construction.

To be able to travel along a three-dimensional conveying path comprising both horizontal and vertical bends, it is preferable if the first pivot and/or the second pivot universally pivotally connect the connecting element to at least one frame.

Especially if the first pivot and/or the second pivot are universally pivotable and consequently the conveyor according to the invention is in principle suitable for travelling along a three-dimensional conveying path, there is a risk that the train of conveying units will exhibit an undesirable turn in the vertical plane at the location of the first pivot and/or the second pivot. In the case of an endless train this phenomenon might be kept within bounds by applying a certain bias to the train, which may interfere with the smooth travel of the train, however, and which moreover leads to a higher mechanical load being exerted on parts of the train. The aforesaid risk in particular plays a role if the chassis are provided with one or a number of supporting elements at only one longitudinal position (i.e. in the conveying direction), as a result of which the chassis in question can tilt forward or backward about a (virtual) horizontal axis perpendicular to the conveying path. To obviate this problem, it is preferable if at least one stabilising element is provided, which stabilising element connects a connecting element to one of the two frames that are interconnected by the connecting element in question, and which engages the connecting element at a position located between the first pivot and the second pivot associated with the connecting element. The at least one stabilising element in question ensures that said forward or backward tilting will not occur, or at least to a significantly reduced extent.

To enable the conveyor to round bends in the conveying path, in spite of the presence of said at least one stabilising element, without the stabilising element being subjected to high mechanical loads and thus create a mechanical resistance to said rounding of a bend, it is preferable if the stabilising element is movably connected at least to either the connecting element or the frame that connects the stabilising element.

It is preferable in that connection if the stabilising element is slidably connected at least to either the connecting element or the frame.

A constructionally advantageous embodiment of the first pivot and/or the second pivot is obtained if the first pivot and/or the second pivot comprise(s) a rubber or at least rubber-like pivot member. The use of such a pivot member makes it possible in a constructionally simple manner for the chassis on the one hand and the connecting element on the other hand to pivot relative to each other for travelling through horizontal or vertical bends in a conveying path.

The advantages of the present invention are in particular obtained if, according to a preferred embodiment of the present invention, an endless train is used, because it is precisely in that case that the risk of undesirable high compressive or tensile stresses occurring in the train is greatest.

If said at least one guide member and/or said at least one supporting element is (are) provided at maximally one longitudinal position of each conveying unit, the rounding of a bend will be relatively easy for a train, in particular if use is made of one or a number of supporting elements that are rigidly connected to the frame in accordance with a previously discussed preferred embodiment. Moreover, a significant saving in costs can be achieved because of the reduction of the number of guide members and/or supporting elements to be used for each chassis.

In order to make it possible in principle to operate the conveyor in two opposite directions, it is preferable if said at least one guide member and/or said at least one supporting element is (are) provided in the centre of the associated conveying unit, seen in the longitudinal direction.

In particular if the conveyor according to the present invention is suitable for handling, in particular sorting, products that are as a rule supported by a single mode-bearing element, the centre-to-centre distance between successive conveying units is preferably at least 30 cm. As a general rule it can be said in that case that the saving in costs which can be achieved and which applies in particular if, according to a previously discussed preferred embodiment, one or a number of supporting elements are rigidly connected to the frame, will be comparatively greater as the centre-to-centre distance is smaller. On the other hand, in the case of a relatively large centre-to-centre distance of at least 90 cm, which renders the conveyor according to the invention suitable in particular for handling luggage, for example at an airport, the invention provides this advantage that, in spite of the relatively large centre-to-centre distance between two successive conveying units, bends in the conveying path can be rounded without comparatively large compressive and tensile stresses occurring in the train and without there being a need to use castors, but instead use one or a number of supporting elements that are rigidly connected to the frame in accordance with a previously discussed preferred embodiment. Because of the constructional simplicity and the related saving in costs that can be achieved by using the invention, the present invention provides the economically sound possibility to use relatively short conveying units, in particular for handling parcels. It is preferable within this framework if the centre-to-centre distance between two successive conveying units ranges between 30 cm and 50 cm, for example 40 cm. On the other hand, the principles of the present invention may also be used with parcel handling apparatus according to the prior art, in which the centre-to-centre distance is typically about 70 cm. Consequently, it is furthermore preferable if the centre-to-centre distance between two successive conveying units ranges between 60 cm and 80 cm. A conveyor according to the invention can be realised by converting an existing conveyor, more specifically the chassis thereof.

The invention will now be explained in more detail by means of a description of the preferred embodiments of the invention, in which reference is made to the following figures.
Figure 1 shows six successive conveying units of the conveyor according to the invention.
Figure 2 shows a chassis of a conveying unit;
Figure 3 shows that chassis of figure 2 in exploded view;
Figure 4 schematically shows a bend of the conveying path along which the conveyor moves.

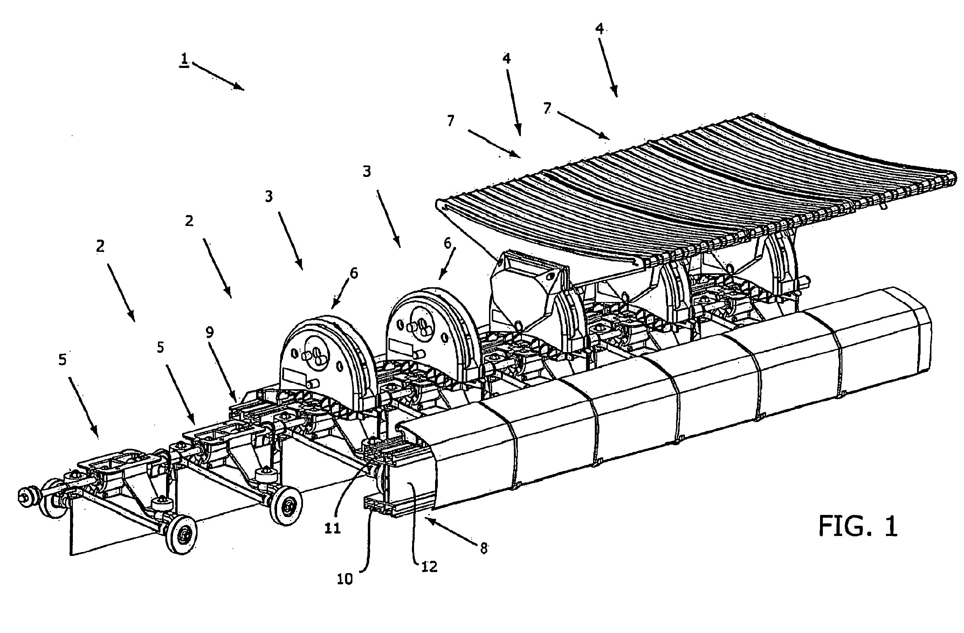

Figure 1 shows six successive conveying units 2, 3, 4 of a sorting conveyor 1 according to the invention. The six conveying units form part of an endless train of conveying units, which travels along an endless conveying path. In addition to horizontal bends, the conveying path also comprises vertical bends, so that the conveying path extends at different levels. The conveying path is defined by two opposed, mirror-image guides 8, 9. Positioned exactly between the guides 8, 9 is the (virtual) central axis of the conveying path. The guides are formed by aluminium section members, which are of substantially horizontal U-shaped cross-section, with the open sides of the U-shapes facing towards each other. More specifically, the guides 8, 9 may each be considered to be built up of two horizontal legs 10, 11, with a vertical web 12 that connects the two horizontal legs 10, 11.

The sorting conveyor 1 is of the tilting deck type. Only the chassis 5 of the two most left-hand conveying units 2 of figure 1 is shown, whilst the two most right-hand conveying units 4 are shown in their entirety, each including a chassis 5, a tilting unit 6 on the chassis 5 and a tilting deck 7, which can be tilted by means of the tilting unit 6. The two central conveying units 3 are shown with the chassis 5 and the tilting unit 6, but without the associated tilting deck 7. For a more detailed description of the tilting unit 6 and the tilting deck 7 reference is made to European patent application EP-A2-1 447 359. Within the framework of the present invention it is not essential, for that matter, that the conveyor is a conveyor of the tilting deck type, and it is not even essential that the conveyor is a sorting conveyor. In addition to that it is not essential that the train of conveying units is an endless train. According to the present invention it may even be advantageous if the conveyor is a non-endless train of conveying units, in particular if the train in question is comparatively long and comparatively high tensile stresses occur within the train.

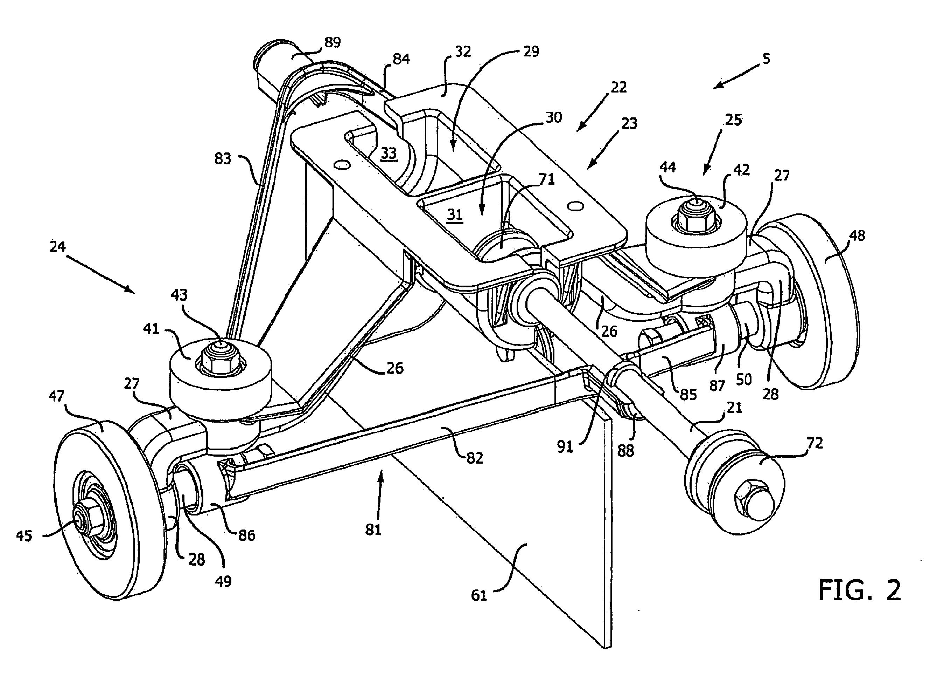

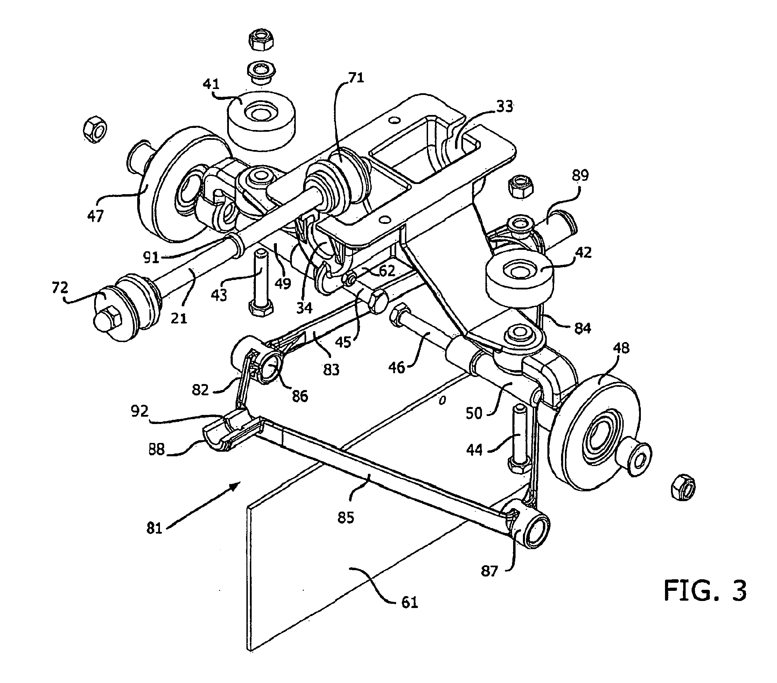

Figures 2 and 3 show a chassis 5 with a connecting rod 21 at the front side of the chassis 5 (in figure 2), by means of which connecting rod 21 the chassis 5 is connected to a next chassis 5.

Each chassis 5 comprises a cast base body 22 built up of a web part 23 and two leg parts 24, 25 that extend substantially obliquely downwards from two opposite sides of the web part 23. Each leg part 24, 25 comprises a diagonal portion 26, a horizontal portion 27 and a vertical portion 28. The web part 23 comprises two cavities 29, 30, which are separated by a partition 31. The web part 23 further comprises a flat upper side 32 on the outer sides of the cavities 29, 30, on which a tilting unit 6 is mounted in applied form.

Disposed below the web part 23 of the base body 22 is a reaction plate 61, which is connected to the base body 22 via a mounting rib 62 present at the bottom side of the web part 23. In applied form, the reaction plate 61 mates with stationary elements disposed along the conveying path for driving the conveyor by means of linear induction motors. Respective guide wheels 41, 42 are connected to the base body 22 on the upper side of the horizontal portions 27 of the leg parts 24, 25, being rotatable about a vertically oriented axle member 43, 44. In addition to that, running wheels 47, 48, are connected to the web part 23 at the outer side of the vertical portions 28 of the leg parts 24, 25, being rotatable about horizontally oriented axle members 45, 46. The axle members 45, 46 also extend on the inner side of the vertical parts 28 of the leg parts 24, 25, at which location a sliding sleeve 49, 50 surrounding the axle members 45, 46 is rigidly connected to the axle members 45, 46 in question.

In applied form (see figure 1), the guide wheels 41, 42 run on the end faces of the legs 11 of the guides 8, 9. The running wheels 47, 48 run on the sides of the legs 10 of the guides 8, 9 that face towards the leg 11.

The web part 23 is provided with slots 33, 34 having the shape of an upside-down keyhole both at the rear side and at the front side. As already said before, a connecting rod 21 is provided for interconnecting adjacent chassis 5. Each connecting rod 21 is provided with a rubber or at least rubber-like pivot member 71, 72 at its ends. The pivot members 71, 72 are centrally provided with a reduced diameter section. The diameter of the remaining part of the pivot member 72 is larger than that of the circular part of the keyhole shape of the slots 33, 34. The pivot member 71 is inserted into the front slot 34 from above, so that the pivot member 71 is retained within the slot 34, as is shown in figures 2 and 3. The pivot member 72 is inserted into a rear slot 33 of a next chassis 5 in the same manner. Because of the rubber-like nature of the material of the pivot members 71, 72, which allows elastic deformations of the pivot members 71, 72, the pivot members 71, 72 function as universal pivots, albeit with a limited range, which suffices, however, considering the bends in the conveying path, with pivoting of the connecting rod 21 with respect to the two chassis 5 interconnected by the connecting rod 21 in question being possible both in the horizontal plane (for horizontal bends) and in the vertical plane (for vertical bends).

Since each chassis 5 comprises only two running wheels 47, 48, whose central axes coincide and which are provided at the centre of the chassis 5, seen in the conveying direction, each chassis 5 tends to tilt forward or backward about the common axis of the running wheels 47, 48. This tendency is partially suppressed on account of the fact that the chassis 5 form part of an endless train. The tensile stress that must occur in such an endless train so as to prevent the individual chassis 5 from tipping over must be relatively high, however, which in turn is disadvantageous in connection with the occurrence of wear on the various parts and in connection with the rounding of bends. For that reason each chassis 5 is provided with a stabilising element 81. The stabilising element 81 is an injection-moulded plastic product that comprises four arms 82-85, whose ends engage each other. The arm 82 slopes down from the centre of the connecting rod 21 in the direction of the sliding sleeve 49. The arm 83 slopes upwards towards the centre of the connecting element 21 (not shown in figure 2) at the rear side of the chassis 5. The arm 84 in turn slopes down from said centre in the direction of the sliding sleeve 50, whilst the arm 85, to conclude, extends from the sliding sleeve 50 in the direction of the centre of the connecting rod 21 (at the front side of the chassis 5). Thus, the main shape of the stabilising element can be considered to form the circumference of a quadrangle, of which two opposite corner points have been folded outside the plane of the quadrangle about the axis that is located therebetween. The diagonals of the quadrangle thus do not intersect but cross each other.

The arms 82 and 83 on the one hand and the arms 84 and 85 on the other hand are interconnected via a cylindrical part 86, 87, whose inside diameter is geared to that of the outside diameter of the sliding sleeves 49, 50, such that the cylindrical parts 86, 87 can slide over the sliding sleeves 49, 50 in a direction transversely to the direction of movement of the chassis 5. The arms 82 and 85 on the one hand and 83 and 84 on the other hand are interconnected by means of connecting pieces 88 and 89, respectively. The connecting piece 88 is U-shaped, whilst the connecting piece 89 is of reverse U-shape. Each connecting rod 21 is centrally provided with a circular ridge 91 having a diameter that is slightly larger diameter than that of the connecting rod 21. The connecting rods 21 are accommodated in the U-shape of the connecting pieces 88, 89 at the location of the ridge 90, with the connecting pieces 88, 89 being internally provided with a groove 92, into which the ridge 90 slips, as a result of which movement of the connecting pieces 88, 89 along the connecting rods 21 is not possible. The connecting pieces 88 and 89 can be interconnected by means of a snap connection (not shown), jointly forming a cylindrical part, as it were, comparable to the cylindrical parts 86 and 87, with this understanding that the connecting pieces 88 and 89 are fixedly connected to the connecting rod 21.

The stabilising element 81 prevents the chassis 5 from tilting. On the other hand it does not interfere with the rounding of bends. During the rounding of such a bends, the arms 82-85 will elastically deform and the cylindrical parts 86,87 will slide over the sliding sleeves 49, 50.

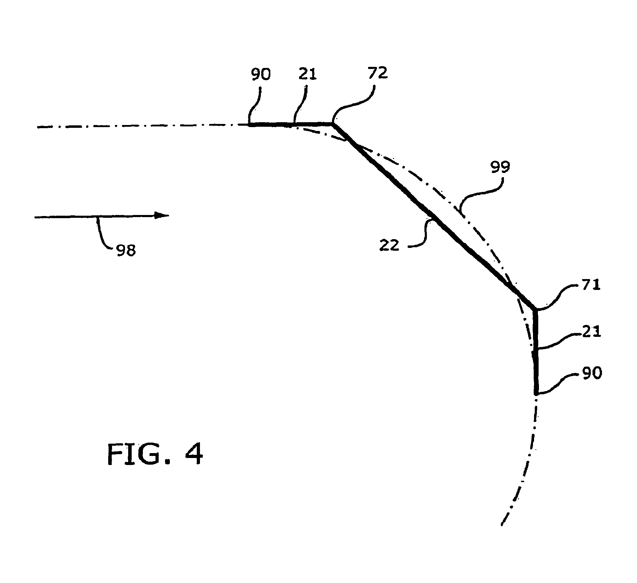

Figure 4 illustrates the advantage of using two pivots 71, 72 between adjacent chassis 5, with the pivots 71, 72 associated with one connecting rod 21 being positioned between the running wheels 47, 48 of the respective chassis 5 that are interconnected by the connecting rod 21 in question. The chain-dotted line in figure 4 indicates (the central axis of) a conveying path comprising a bend 99. The slightly thicker line beside said line in figure 4 indicates a base body 22 of a chassis 5, including, on either side thereof, half the length of the associated connecting rods 21, viz. up to the ridges 90 in the centre of the connecting rod 21. For the sake of clarity the radius of the bend 99 and the dimensions of the base body 22 and the connecting rods 21 has been selected such in the illustrated example that the pitch of the train of chassis 5 extends through 90° of he bend 99.

As figure 4 clearly shows, the illustrated parts of the connecting rods 21 extend completely on the outer side of the bend 99, whilst the base body 22 (at least the central axis thereof) extends partially on the outer side and partially on the inner side of the bend 99. Ideally, the joint length of the illustrated parts of the connecting rods 21 and the base body 22 equals the length of the conveying path, insofar as it is located between the points 90 in the bend 99 in figure 4, and preferably deviates maximally 0.07% from the aforesaid length of the conveying path. This implies that in the ideal case said lengths are identical, no accelerations or decelerations will occur internally in the plane of chassis 5 during the rounding of the bend 99 or, insofar as comparatively minor deviations occur, comparatively minor accelerations and decelerations will locally occur within the train as well.

## Claims

1. A conveyor (1) comprising a train of interconnected conveying units (2, 3, 4) which are movable along a guide (8, 9) that defines a conveying path having a central axis, each conveying unit comprising a chassis (5) and a load-bearing element (7) for supporting products to be conveyed, said chassis comprising a frame (22), at least one guide element (41, 42) connected to the frame for guiding cooperation with said guide, at least one supporting element (47, 48) connected to the frame, via which the associated conveying unit is supported on a supporting surface, said conveyor further comprising a connecting element (21) between two successive chassis, which connecting element is pivotally connected, via a first pivot (72), to the frame of a first chassis of said two successive chassis, and which is on the other hand pivotally connected, via a second pivot (71), to the frame of a second chassis of said two successive chassis, **characterised in that** the first pivot (72) and the second pivot (71) associated with the connecting element (21) are positioned between the at least one guide element (41, 42) associated with the first chassis and the at least one guide element (41, 42) associated with the second chassis, seen in the longitudinal direction of the train, in such a manner that the first pivot (72) and the second pivot (71) are positioned on the outer side of the central axis (99) of the conveying path and that a central part (22) of the connecting element (21) located between ends of the connecting element is positioned on the inner side of the central axis (99) of the conveying path when rounding a bend in the conveying path.

2. A conveyor according to claim 1, **characterised in that** the centre-to-centre distance between two successive chassis (5) in a rectilinear part of the conveying path, measured along the central axis of the conveying path, deviates maximally 0.07% from the centre-to-centre distance between two successive chassis in a bend of the conveying path, measured along the central axis of the conveying path:

3. A conveyor according to claim 1 or 2, **characterised in that** the centre-to-centre distance between two successive chassis (5) in a rectilinear part of the conveying path, measured along the central axis of the conveying path, equals the centre-to-centre distance between two successive chassis in a bend of the conveying path, measured along the central axis of the conveying path.

4. A conveyor according to claim 1, 2 or 3, **characterised in that** the load-bearing element (7) is fully supported by the frame (22).

5. A conveyor according to any one of the preceding claims, **characterised in that** the guide comprises two guide members (8, 9) that extend on opposite sides of the central axis of the conveying path, and **in that** each chassis (5) comprises at least two guide elements (41, 42) that guidingly co-operate with the two respective guide members.

6. A conveyor according to any one of the preceding claims, **characterised in that** at least one guide element (41, 42) and said at least one supporting element (47, 48) lie directly beside each other, seen in the conveying direction.

7. A conveyor according to any one of the preceding claims, **characterised in that** said at least one supporting element (47, 48) is rigidly connected to the frame (22).

8. A conveyor according to any one of the preceding claims, **characterised in that** said at least one supporting element (47, 48) is positioned further away from the central axis of the conveying path than said at least one guide element (41, 42).

9. A conveyor according to any one of the preceding claims, **characterised in that** said connecting element (21) is at least substantially rod-shaped.

10. A conveyor according to any one of the preceding claims, **characterised in that** the first pivot (72) and/or the second pivot (71) universally pivotally connect the connecting element (21) to at least one frame (22).

11. A conveyor according to any one of the preceding claims, **characterised in that** at least one stabilising element (81) is provided, which stabilising element connects a connecting element (21) to one of the two frames (22) that are interconnected by the connecting element in question, and which engages the connecting element at a position located between the first pivot (72) and the second pivot (71) associated with the connecting element.

12. A conveyor according to claim 11, **characterised in that** the stabilising element (81) is movably connected at least to either the connecting element (21) or the frame (22) that connects the stabilising element.

13. A conveyor according to claim 12, **characterised in that** the stabilising element (81) is slidably connected at least to either the connecting element (21) or the frame (22).

14. A conveyor according to any one of the preceding claims, **characterised in that** the first pivot (72) and/or the second pivot (71) comprise(s) a rubber or at least rubber-like pivot member.

15. A conveyor according to any one of the preceding claims, **characterised in that** said train is an endless train.

16. A conveyor according to any one of the preceding claims, **characterised in that** said at least one guide member (41, 42) and/or said at least one supporting element (47, 48) is (are) provided at maximally one longitudinal position of each conveying unit (2, 3, 4).

17. A conveyor according to claim 16, **characterised in that** said at least one guide member (41, 42) and/or said at least one supporting element (47, 48) is (are) provided in the centre of the associated conveying unit (2, 3, 4), seen in the longitudinal direction.

18. A conveyor according to any one of the preceding claims, **characterised in that** the centre-to-centre distance between successive conveying units (2, 3, 4) is at least 30 cm.

## Patentansprüche

1. Förderer (1), umfassend einen Zug miteinander verbundener Fördereinheiten (2, 3, 4), die entlang einer Führung (8, 9) beweglich sind, welche einen Förderweg mit einer Mittelachse definiert, wobei jede Fördereinheit ein Fahrwerk (5) und ein tragendes Element (7) zum Stützen von Produkten, die gefördert werden sollen, umfasst, wobei das Fahrwerk einen Rahmen (22), zumindest ein Führungselement (41, 42), das mit dem Rahmen zum leitenden Zusammenwirken mit der Führung verbunden ist, zumindest ein Stützelement (47, 48) umfasst, das mit dem Rahmen verbunden ist und über das die zugeordnete Fördereinheit auf einer Stützfläche gestützt ist, der Förderer ferner umfassend ein Verbindungselement (21) zwischen zwei aufeinanderfolgenden Fahrwerken, wobei das Verbindungselement über einen ersten Drehpunkt (72) drehbar mit dem Rahmen eines ersten Fahrwerks der zwei aufeinanderfolgenden Fahrwerke verbunden ist und andererseits über einen zweiten Drehpunkt (71) drehbar mit dem Rahmen eines zweiten der aufeinanderfolgenden Fahrwerke verbunden ist, **dadurch gekennzeichnet, dass** bei Betrachtung in der Längsrichtung des Zugs der erste Drehpunkt (72) und der zweite Drehpunkt (71), die dem Verbindungselement (21) zugeordnet sind, derart zwischen dem zumindest einen Führungselement (41, 42), das dem ersten Fahrwerk zugeordnet ist, und dem zumindest einen Führungselement (41, 42), das dem zweiten Fahrwerk zugeordnet ist, angeordnet sind, dass der erste Drehpunkt (72) und der zweite Drehpunkt (71) auf der Außenseite der Mittelachse (99) des Förderwegs angeordnet sind, und dass ein Mittelteil (22) des Verbindungselements (21), das sich zwischen Enden des Verbindungselements befindet, beim Umfahren einer Biegung in dem Förderweg auf der Innenseite der Mittelachse (99) des Förderwegs angeordnet ist.

2. Förderer nach Anspruch 1, **dadurch gekennzeichnet, dass** der Abstand von der Mitte zur Mitte zwischen zwei aufeinanderfolgenden Fahrwerken (5) in einem geradlinigen Teil des Förderwegs, gemessen entlang der Mittelachse des Förderwegs, höchstens 0,07% vom Abstand von der Mitte zur Mitte zwischen zwei aufeinanderfolgenden Fahrwerken in einer Biegung des Förderwegs, gemessen entlang der Mittelachse des Förderwegs, abweicht.

3. Förderer nach einem der Ansprüche 1 oder 2, **dadurch gekennzeichnet, dass** der Abstand von der Mitte zur Mitte zwischen zwei aufeinanderfolgenden Fahrwerken (5) in einem geradlinigen Teil des Förderwegs, gemessen entlang der Mittelachse des Förderwegs, gleich dem Abstand von der Mitte zur Mitte zwischen zwei aufeinanderfolgenden Fahrwerken in einer Biegung des Förderwegs, gemessen entlang der Mittelachse des Förderwegs, ist.

4. Förderer nach einem der Ansprüche 1, 2 oder 3, **dadurch gekennzeichnet, dass** das tragende Element (7) vollständig durch den Rahmen (22) gestützt ist.

5. Förderer nach einem der vorhergehenden Ansprüche, **dadurch gekennzeichnet, dass** die Führung zwei Führungsglieder (8, 9) umfasst, die auf gegenüberliegenden Seiten der Mittelachse des Förderwegs verlaufen, und dass jedes Fahrwerk (5) zumindest zwei Führungselemente (41, 42) umfasst, die führend mit den zwei jeweiligen Führungsgliedern zusammenwirken.

6. Förderer nach einem der vorhergehenden Ansprüche, **dadurch gekennzeichnet, dass** zumindest ein Führungselement (41, 42) und das zumindest eine Stützelement (47, 48) bei Betrachtung in der Förderrichtung direkt nebeneinanderliegen.

7. Förderer nach einem der vorhergehenden Ansprüche, **dadurch gekennzeichnet, dass** das zumindest eine Stützelement (47, 48) starr mit dem Rahmen (22) verbunden ist.

8. Förderer nach einem der vorhergehenden Ansprüche, **dadurch gekennzeichnet, dass** das zumindest eine Stützelement (47, 48) weiter von der Mittelachse des Förderwegs weg als das zumindest eine Führungselement (41, 42) angeordnet ist.

9. Förderer nach einem der vorhergehenden Ansprüche, **dadurch gekennzeichnet, dass** das Verbindungselement (21) zumindest im Wesentlichen stangenförmig ist.

10. Förderer nach einem der vorhergehenden Ansprüche, **dadurch gekennzeichnet, dass** der erste Drehpunkt (72) und/oder der zweite Drehpunkt (71) das Verbindungselement (21) universal drehbar mit zumindest einem Rahmen (22) verbinden.

11. Förderer nach einem der vorhergehenden Ansprüche, **dadurch gekennzeichnet, dass** zumindest ein Stabilisierungselement (81) vorgesehen ist, wobei das Stabilisierungselement ein Verbindungselement (21) mit einem der zwei Rahmen (22) verbindet, die durch das besagte Verbindungselement miteinander verbunden sind, und das Verbindungselement an einer Position in Eingriff nimmt, die sich zwischen dem ersten Drehpunkt (72) und dem zweiten Drehpunkt (71) befindet, die dem Verbindungselement zugeordnet sind.

12. Förderer nach Anspruch 11, **dadurch gekennzeichnet, dass** das Stabilisierungselement (81) zumindest mit entweder dem Verbindungselement (21) oder dem Rahmen (22), der das Stabilisierungselement verbindet, drehbar verbunden ist.

13. Förderer nach Anspruch 12, **dadurch gekennzeichnet, dass** das Stabilisierungselement (81) zumindest mit entweder dem Verbindungselement (21) oder dem Rahmen (22) verschiebbar verbunden ist.

14. Förderer nach einem der vorhergehenden Ansprüche, **dadurch gekennzeichnet, dass** der erste Drehpunkt (72) und/oder der zweite Drehpunkt (71) ein Kautschuk- oder zumindest kautschukartiges Drehglied umfasst/umfassen.

15. Förderer nach einem der vorhergehenden Ansprüche, **dadurch gekennzeichnet, dass** der Zug ein Endloszug ist.

16. Förderer nach einem der vorhergehenden Ansprüche, **dadurch gekennzeichnet, dass** das zumindest eine Führungsglied (41, 42) und/oder das zumindest eine Stützelement (47, 48) an höchstens einer Längsposition jeder Fördereinheit (2, 3, 4) vorgesehen ist/sind.

17. Förderer nach Anspruch 16, **dadurch gekennzeichnet, dass** das zumindest eine Führungsglied (41, 42) und/oder das zumindest eine Stützelement (47, 48) bei Betrachtung in der Längsrichtung in der Mitte der zugeordneten Fördereinheit (2, 3, 4) vorgesehen ist/sind.

18. Förderer nach einem der vorhergehenden Ansprüche, **dadurch gekennzeichnet, dass** der Abstand von der Mitte zur Mitte zwischen aufeinanderfolgenden Fördereinheiten (2, 3, 4) zumindest 30 cm beträgt.

## Revendications

1. Transporteur (1) comprenant un train d'unités de transport reliées mutuellement (2, 3, 4) qui sont mobiles le long d'un guidage (8, 9) qui définit un chemin de transport possédant un axe central, chaque unité de transport comprenant un châssis (5) et un élément de support de charge (7) pour supporter des produits destinés à être transportés, ledit châssis comprenant un cadre (22), au moins un élément de guidage (41, 42) relié au cadre pour une coopération de guidage avec ledit guidage, au moins un élément de support (47, 48) relié au cadre, par l'intermédiaire duquel l'unité de transport associée est supportée sur une surface de support, ledit transporteur comprenant en outre un élément de liaison (21) entre deux châssis successifs, lequel élément de liaison est relié de façon pivotante, par l'intermédiaire d'un premier pivot (72), au cadre d'un premier châssis desdits deux châssis successifs, et qui est d'autre part relié de façon pivotante, par l'intermédiaire d'un second pivot (71), au cadre d'un second châssis desdits deux châssis successifs, **caractérisé en ce que** le premier pivot (72) et le second pivot (71) associés à l'élément de liaison (21) sont positionnés entre l'au moins un élément de guidage (41, 42) associé au premier châssis et l'au moins un élément de guidage (41, 42) associé au second châssis, vus dans la direction longitudinale du train, de manière telle que le premier pivot (72) et le second pivot (71) sont positionnés sur le côté extérieur de l'axe central (99) du chemin de transport et qu'une partie centrale (22) de l'élément de liaison (21) située entre des extrémités de l'élément de liaison est positionnée sur le côté intérieur de l'axe central (99) du chemin de transport en tournant dans un virage dans le chemin de transport.

2. Transporteur selon la revendication 1, **caractérisé en ce que** la distance de centre à centre entre deux châssis successifs (5) dans une partie rectiligne du chemin de transport, mesurée le long de l'axe central du chemin de transport, dévie au maximum de 0,07 % par rapport à la distance de centre à centre entre deux châssis successifs dans un virage du chemin de transport, mesurée le long de l'axe central du chemin de transport.

3. Transporteur selon la revendication 1 ou 2, **caractérisé en ce que** la distance de centre à centre entre deux châssis successifs (5) dans une partie rectiligne du chemin de transport, mesurée le long de l'axe central du chemin de transport, est égale à la distance de centre à centre entre deux châssis successifs dans un virage du chemin de transport, mesurée le long de l'axe central du chemin de transport.

4. Transporteur selon la revendication 1, 2 ou 3, **caractérisé en ce que** l'élément de support de charge (7) est entièrement supporté par le cadre (22).

5. Transporteur selon l'une quelconque des revendications précédentes, **caractérisé en ce que** le guidage comprend deux éléments de guidage (8, 9) qui s'étendent sur des côtés opposés de l'axe central du chemin de transport, et **en ce que** chaque châssis (5) comprend au moins deux éléments de guidage (41, 42) qui coopèrent en guidage avec les deux éléments de guidage respectifs.

6. Transporteur selon l'une quelconque des revendications précédentes, **caractérisé en ce qu'**au moins un élément de guidage (41, 42) et ledit au moins un élément de support (47, 48) se trouvent directement l'un à côté de l'autre, vus dans la direction de transport.

7. Transporteur selon l'une quelconque des revendications précédentes, **caractérisé en ce que** ledit au moins un élément de support (47, 48) est relié au cadre (22) de façon rigide.

8. Transporteur selon l'une quelconque des revendications précédentes, **caractérisé en ce que** ledit au moins un élément de support (47, 48) est positionné de façon plus éloignée de l'axe central du chemin de transport que ledit au moins un élément de guidage (41, 42).

9. Transporteur selon l'une quelconque des revendications précédentes, **caractérisé en ce que** ledit élément de liaison (21) présente au moins sensiblement une forme de barre.

10. Transporteur selon l'une quelconque des revendications précédentes, **caractérisé en ce que** le premier pivot (72) et/ou le second pivot (71) relient de façon universellement pivotante l'élément de liaison (21) à au moins un cadre (22).

11. Transporteur selon l'une quelconque des revendications précédentes, **caractérisé en ce qu'**au moins un élément stabilisateur (81) est prévu, lequel élément stabilisateur relie un élément de liaison (21) à un des deux cadres (22), qui sont reliés mutuellement par l'élément de liaison en question, et qui entre en prise avec l'élément de liaison dans une position située entre le premier pivot (72) et le second pivot (71) associés à l'élément de liaison.

12. Transporteur selon la revendication 11, **caractérisé en ce que** l'élément stabilisateur (81) est relié de façon mobile au moins à l'élément de liaison (21) ou au cadre (22) qui relie l'élément stabilisateur.

13. Transporteur selon la revendication 12, **caractérisé en ce que** l'élément stabilisateur (81) est relié de façon coulissante au moins à l'élément de liaison (21) ou au cadre (22).

14. Transporteur selon l'une quelconque des revendications précédentes, **caractérisé en ce que** le premier pivot (72) et/ou le second pivot (71) comprend/comprennent un élément de pivot en caoutchouc ou au moins caoutchouteux.

15. Transporteur selon l'une quelconque des revendications précédentes, **caractérisé en ce que** ledit train est un train sans fin.

16. Transporteur selon l'une quelconque des revendications précédentes, **caractérisé en ce que** ledit au moins un élément de guidage (41, 42) et/ou ledit au moins un élément de support (47, 48) est (sont) prévu(s) au maximum dans une position longitudinale de chaque unité de transport (2, 3, 4).

17. Transporteur selon la revendication 16, **caractérisé en ce que** ledit au moins un élément de guidage (41, 42) et/ou ledit au moins un élément de support (47, 48) est (sont) prévu(s) au centre de l'unité de transport associée (2, 3, 4), vue dans la direction longitudinale.

18. Transporteur selon l'une quelconque des revendications précédentes, **caractérisé en ce que** la distance de centre à centre entre des unités de transport successive (2, 3, 4) est au moins 30 cm.
